# EUROPÄISCHE PATENTSCHRIFT

(11) **EP 0 315 918 B1**
(45) Veröffentlichungstag und Bekanntmachung des Hinweises auf die Patenterteilung: **24.02.1993**
(21) Anmeldenummer: 88118456.8
(22) Anmeldetag: 04.11.1988
(51) Int. Cl.: H04L 12/54

(54) **Vermittlungsknoten für die Vermittlung von in Datenpaketen übertragenen Datensignalen**
Switching node for switching data signals carried in data packets
Noeud de commutation pour la commutation de signaux de données contenus dans des paquets de données

(30) Priorität: 11.11.1987 DE 3738334
(43) Veröffentlichungstag der Anmeldung: 17.05.1989
(73) Patentinhaber: SIEMENS AKTIENGESELLSCHAFT, 80333 München (DE)
(72) Erfinder: Niestegge, Gerhard, Dr.rer.nat, D-8000 München 70 (DE)

(56) Entgegenhaltungen:
- EP-A- 0 113 639
- WO-A-86/02510
- FR-A- 2 539 939
- INTERNATIONAL SWITCHING SYMPOSIUM 1987, "Innovations in Switching Technology", 15.-20. März 1987, Phoenix, Arizona, Seiten 367-372, IEEE, Phoenix, US; M. DIEUDONNE et al.: "Switching techniques for asynchronous time division multiplexing (or fast packet switching)"

## Beschreibung

Die Erfindung betrifft einen Vermittlungsknoten für die Vermittlung von in Datenpaketen übertragenen Datensignalen mit wenigstens einem Koppelelement, welches eine Anzahl von n Eingangsleitungen und eine Anzahl n von mit den Eingangsleitungen über einen Raumkoppler wahlfrei verbindbaren Ausgangsleitungen aufweist, wobei den Eingangsleitungen jeweils ein Pufferspeicher zugeordnet ist, in welchem k auf der jeweiligen Eingangsleitung auftretende Datenpakete vor ihrer Weiterleitung an die jeweils durch die in dem jeweiligen Datenpaket enthaltene Adressensignale bezeichnete Ausgangsleitung speicherbar sind und welcher eine Mehrzahl m ≦ k Ausgänge aufweist, über die gleichzeitig m in dem jeweiligen Pufferspeicher gespeicherte und an m unterschiedliche Ausgangsleitungen weiterzuleitende Datenpakete einem mxn Eingänge und n Ausgänge aufweisenden Raumkoppler zuführbar sind.

Bei bekannten Vermittlungsknoten, wie sie beispielsweise aus der US-PS 4 491 945 bekannt sind, weisen die den Eingangsleitungen zugeordneten Pufferspeicher jeweils lediglich einen Ausgang auf. Damit kann zu einem vorgegebenen Zeitpunkt lediglich ein Datenpaket von einem Pufferspeicher aus zu dem Raumkoppler hin übertragen werden.

Es ist bereits vorgeschlagen worden, zur Verbesserung der Verkehrsleistungsfähigkeit die in einem Koppelelement eines Vermittlungsknotens vorgesehenen Pufferspeicher jeweils mit m Ausgängen zu versehen, die einem mxn Eingänge und n Ausgänge aufweisenden Raumkoppler zugeführt sind.

Darüber hinaus ist es bereits bekannt (ISS 87 Conf. Rec., Seiten 974 bis 978), die über Eingangsleitungen eines Koppelelementes übertragenen Datenpakete in einem zentralen Speicher zwischenzuspeichern und die Speicheradressen der einzelnen Pakete in den Ausgängen des Koppelelementes zugeordneten Warteschlangen-Speichern abzulegen.

Es ist nun Aufgabe der vorliegenden Erfindung, einen Weg zu zeigen, wie bei einem Vermittlungsknoten der eingangs genannten Art mit einem geringen Steuerungsaufwand die Vermittlung der in den Pufferspeichern eines Koppelelementes gespeicherten Datenpakete gesteuert werden kann.

Gelöst wird die vorstehend aufgezeigte Aufgabe bei einem Vermittlungsknoten der eingangs genannten Art gemäß der vorliegenden Erfindung dadurch, daß den Pufferspeichern jeweils eine Steuereinrichtung zugehörig ist, welche auf die Aufnahme eines Datenpaketes in einem freien Speicherplatz des jeweiligen Pufferspeichers hin eine den betreffenden Speicherbereich sowie den jeweiligen Pufferspeicher bezeichnende Speicheradresse und in dem jeweiligen Datenpaket enthaltene, eine der Ausgangsleitungen bezeichnende Adressensignale bereitstellt, daß den Ausgangsleitungen jeweils ein Warteschlangen-Pufferspeicher zugeordnet ist, in welche nach Maßgabe der von den Steuereinrichtungen bereitgestellten Adressensignale die mit diesen zusammen auftretenden Speicheradressen einschreibbar sind, daß die Warteschlangen-Pufferspeicher von einer zentralen Steuereinrichtung her in vorgegebenen Zeitintervallen für die Abgabe jeweils einer Speicheradresse zyklisch ansteuerbar sind und daß die zentrale Steuereinrichtung einerseits anhand der von den Warteschlangen-Pufferspeichern bereitgestellten Speicheradressen die Einstellung des Raumkopplers steuert und andererseits den Steuereinrichtungen für die Steuerung der Abgabe von Datenpaketen aus den Pufferspeichern die bereitstehenden Speicheradressen zusammen mit Angaben bezüglich des für die Abgabe eines Datenpaketes zu benutzenden Ausganges des jeweiligen Pufferspeichers zuführt.

Die Erfindung bringt den Vorteil mit sich, daß von der zentralen Steuereinrichtung her mit einem relativ geringen Steuerungsaufwand für eine Übertragung zu den n Ausgängen des Raumkopplers hin Datenpakete aus den einzelnen dezentralen Pufferspeichern wahlfrei abrufbar sind, wobei die Pufferspeicher jeweils gegebenenfalls die gleichzeitige Abgabe von bis zu m Datenpaketen gestatten.

Gemäß einer Weiterbildung der vorliegenden Erfindung ist vorgesehen, daß sich in aufeinanderfolgenden Zeitintervallen die Startposition für die zyklische Ansteuerung der Warteschlangen-Pufferspeicher durch die zentrale Steuereinrichtung jeweils um einen Warteschlangen-Pufferspeicher verschiebt. Dies bringt den Vorteil mit sich, daß die n Ausgangsleitungen des Koppelelementes gleichberechtigt in die Übertragung von Datenpaketen einbezogen sind. Bezeichnen von den der zentralen Steuereinrichtung im Zuge einer zyklischen Ansteuerung der Warteschlangen-Pufferspeicher nacheinander bereitgestellten n Speicheradressen mehr als m ein und denselben Pufferspeicher, so können in dem jeweiligen Zeitintervall lediglich diejenigen Ausgangsleitungen in eine Übertragung von Datenpaketen einbezogen werden, welche den ersten m Warteschlangen-Pufferspeichern zugeordnet sind. Die darüber hinausgehende Anzahl von Ausgangsleitungen ist dagegen von einer Übertragung von Datenpaketen ausgeschlossen. Bei einer festen Startposition für die zyklische Ansteuerung der Warteschlangen-Pufferspeicher würde dies dazu führen, daß von einem solchen Ausschluß stets nur eine bestimmte Gruppe von Ausgangsleitungen betroffen wäre.

Gemäß einer weiteren Ausgestaltung der vorliegenden Erfindung ist vorgesehen, daß die zentrale Steuereinrichtung für den Fall, daß bei der zyklischen Ansteuerung der Warteschlangen-Pufferspeicher innerhalb eines Zeitintervalls von zumindest einem der Warteschlangen-Pufferspeicher eine Speicheradresse abgegeben wird, welche einen Pufferspeicher bezeichnet, dessen m Ausgänge bereits für die Abgabe von Datenpaketen belegt sind, den jeweiligen Warteschlangen-Pufferspeicher erneut zur Abgabe der nächsten anstehenden Speicheradresse ansteuert. Dies bringt den Vorteil einer Erhöhung der Vermittlungskapazität des Vermittlungsknotens mit sich.

Im folgenden wird nun die vorliegende Erfindung anhand von Zeichnungen beispielsweise näher erläutert.
FIG 1 zeigt ein Blockschaltbild eines Koppelelementes, bei dem die Erfindung angewandt ist,
FIG 2 zeigt einen möglichen Aufbau eines in FIG 1 lediglich schematisch dargestellten Pufferspeichers und einer damit verbundenen Pufferspeicher-Steuereinrichtung,
FIG 3 zeigt ein Zeitdiagramm, auf welches im Zuge der Beschreibung eingegangen wird und
FIG 4 zeigt einen möglichen Aufbau einer in FIG 1 lediglich schematisch dargestellten zentralen Steuereinrichtung.

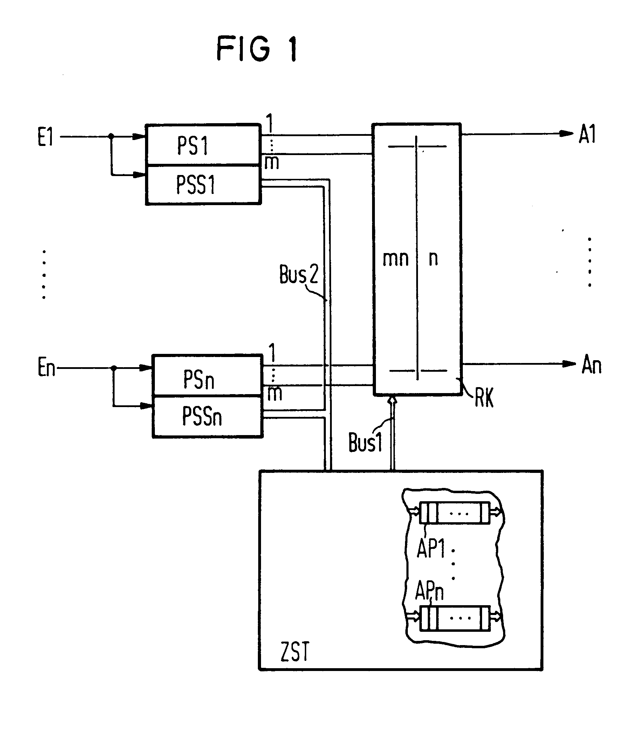

In FIG 1 ist ein Koppelelement eines Vermittlungsknotens in Form eines Blockschaltbildes dargestellt. Dabei sind lediglich die für das Verständnis der vorliegenden Erfindung erforderlichen Schaltungsteile angegeben.

Das Koppelelement weist n Eingangsleitungen E1 bis En auf, von denen lediglich die Eingangsleitungen E1 und En dargestellt sind. Die Eingangsleitungen können dabei mit Datenpakete abgebenden Endeinrichtungen oder mit Ausgangsleitungen eines oder mehrerer vorgeschalteter Koppelelemente des Vermittlungsknotens verbunden sein. Jeder der Eingangsleitungen ist jeweils ein Pufferspeicher zugeordnet, in welchem k Datenpakete speicherbar sind. Der der Eingangsleitung E1 bzw. En zugeordnete Pufferspeicher ist dabei mit PS1 bzw. PSn bezeichnet. Jeder der Pufferspeicher ist von einer gesonderten, mit der zugehörigen Eingangsleitung verbundenen Pufferspeicher-Steuereinrichtung her steuerbar. Die dem Pufferspeicher PS1 bzw. PSn zugeordnete Pufferspeicher-Steuereinrichtung trägt dabei die Bezeichnung PSS1 bzw. PSSn.

Die genannten Pufferspeicher PS1 bis PSn weisen jeweils m ≦ k Ausgänge 1, ..., m auf, die einem Raumkoppler RK zugeführt sind.

Dieser Raumkoppler ist entsprechend der Anzahl n der Pufferspeicher mit mxn Eingängen und n Ausgängen versehen. Die n Ausgänge sind dabei mit Ausgangsleitungen A1 bis An verbunden, die an Datenpakete aufnehmende Endeinrichtungen oder an Eingangsleitungen eines oder mehrerer nachgeschalteter Koppelelemente des Vermittlungsknotens angeschlossen sein können.

Für die Einstellung des Raumkopplers RK ist mit diesem über ein Busleitungssystem BUS1 eine zentrale Steuereinrichtung ZST, beispielsweise in Form einer Mikroprozessoranordnung, verbunden, welche n Warteschlangen-Pufferspeicher AP1 bis APn aufweist, die den Ausgangsleitungen individuell zugeordnet sind. Diese zentrale Steuereinrichtung steht außerdem über ein Busleitungssystem BUS2 mit den genannten Pufferspeicher-Steuereinrichtungen PSS1 bis PSSn in Verbindung.

Nachdem zuvor der Aufbau des in der FIG 1 dargestellten Koppelelementes erläutert worden ist, wird nunmehr auf dessen Wirkungsweise eingegangen. Dazu wird davon ausgegangen, daß den dem Koppelelement über die einzelnen Eingangsleitungen E1 bis En zugeführten, virtuellen Verbindungen zugehörigen Datenpaketen Adressensignale beigefügt sind, welche die für die jeweilige virtuelle Verbindung ausgewählte Ausgangsleitung des Koppelelementes bezeichnen. Diese Datenpakete mögen dabei gegebenenfalls beispielsweise von dem Koppelelement vorgeschalteten Einrichtungen entsprechend aufbereitet sein. Die Datenpakete mögen im übrigen eine feste Länge haben.

Die beispielsweise über die Eingangsleitung E1 nacheinander dem Koppelelement zugeführten Datenpakete werden vor ihrer Weiterleitung über das Koppelelement in dem Pufferspeicher PS1 zwischengespeichert. Diese Zwischenspeicherung erfolgt unter der Steuerung der Pufferspeicher-Steuereinrichtung PSS1, welche auf das Eintreffen eines Datenpaketes hin einen freien Speicherbereich des Pufferspeichers PS1 für die Zwischenspeicherung des jeweiligen Datenpaketes ansteuert. Mit dem Zwischenspeichern eines Datenpaketes überträgt die Pufferspeicher-Steuereinrichtung PSS1 die diesem Datenpaket beigefügten Adressensignale zusammen mit der Adresse desjenigen Speicherbereiches, unter welcher das gerade aufgenommene Datenpaket gespeichert ist, über das Busleitungssystem BUS2 zu der zentralen Steuereinrichtung ZST hin. Durch diese Adresse ist auch gleichzeitig der Pufferspeicher PS1 bezeichnet.

Die gleichen Vorgänge laufen auch in den übrigen, zu dem Koppelelement gehörenden Pufferspeichern (PS2 bis PSn) und Pufferspeicher-Steuereinrichtungen (PSS2 bis PSSn) bei der Zwischenspeicherung von auf den Eingangsleitungen E2 bis En eintreffenden Datenpaketen ab.

Die zentrale Steuereinrichtung ZST trägt die ihr zugeführten Speicherbereichs-Adressen nach Maßgabe der zusammen mit diesen jeweils auftretenden, eine der Ausgangsleitungen A1 bis An bezeichnenden Adressensignale in den jeweils in Frage kommenden Warteschlangen-Pufferspeicher (AP1 bis APn) ein. Diese Warteschlangen-Pufferspeicher (FIFO-Speicher) werden zu vorgegebenen Zeitabschnitten, die beispielsweise der Länge eines zu übertragenden Datenpaketes entsprechen, zyklisch angesteuert. Dabei stellen die Warteschlangen-Pufferspeicher die in ihnen jeweils an erster Stelle gespeicherte Speicherbereichs-Adresse bereit. Anhand der so nacheinander bereitgestellten Speicherbereichs-Adressen stellt die zentrale Steuereinrichtung den Raumkoppler RK über das Busleitungssystem BUS1 ein. Dazu werden von den insgesamt vorhandenen mxn Eingängen des Raumkopplers maximal n Eingänge über Koppelpunkte mit den Ausgangsleitungen A1 bis An verbunden.

Bei dem hier beschriebenen Ausführungsbeispiel wird im übrigen bei der zyklischen Ansteuerung der Warteschlangen-Pufferspeicher von der zentralen Steuereinrichtung her in aufeinanderfolgenden Zeitintervallen die Startposition eines solchen Zyklus um jeweils einen Warteschlangen-Pufferspeicher verschoben. Beispielsweise beginnt also ein Zyklus mit dem Warteschlangen-Pufferspeicher AP2, wenn in dem vorangegangenen Zyklus mit dem Warteschlangen-Pufferspeicher AP1 begonnen worden ist.

Auf die Einstellung des Raumkopplers RK hin überträgt dann die zentrale Steuereinrichtung ZST in jedem festgelegten Zeitintervall nacheinander die Speicherbereichs-Adressen über das Busleitungssystem BUS2 zu den jeweils in Frage kommenden Pufferspeicher-Steuereinrichtungen hin. Dabei kann eine Pufferspeicher-Steuereinrichtung entsprechend der Anzahl der Ausgänge des zugehörigen Pufferspeichers m Speicherbereichs-Adressen zugeführt erhalten. Nach Maßgabe der Speicherbereichs-Adresse bzw. Speicherbereichs-Adressen, die eine Pufferspeicher-Steuereinrichtung gerade zugeführt erhält, steuert die jeweilige Pufferspeicher-Steuereinrichtung den zugehörigen Pufferspeicher an und veranlaßt diesen durch eine entsprechende Anzahl von Lesebefehlen zur Abgabe eines oder mehrerer Datenpakete. Der dabei jeweils zu benutzende Ansgang ist durch den Speicherbereichs-Adressen jeweils beigefügte Angaben festgelegt.

Die zentrale Steuereinrichtung ZST ist bei dem beschriebenen Ausführungsbeispiel im übrigen derart ausgebildet, daß sie für den Fall, daß bei der zyklischen Abfrage der Warteschlangen-Pufferspeicher AP1 bis APn von zumindest einem der Warteschlangen-Pufferspeicher eine Speicherbereichs-Adresse bereitgestellt wird, welche einen Pufferspeicher bezeichnet, dessen m Ausgänge bereits durch zuvor bereitgestellte Speicherbereichs-Adressen für die Abgabe von Datenpaketen belegt sind, den jeweiligen Warteschlangen-Pufferspeicher erneut zur Abgabe der nächsten anstehenden Speicherbereichs-Adressen ansteuert. Bezeichnet auch diese Speicherbereichs-Adresse einen bereits hinsichtlich seiner Ausgänge belegten Pufferspeicher, so wiederholt sich der Ansteuervorgang bis eine Speicherbereichs-Adresse gefunden ist, die einen hinsichtlich seiner Ausgänge belegbaren Pufferspeicher bezeichnet.

Vorstehend wurde davon ausgegangen, daß jeder der Pufferspeicher PS1 bis PSn m ≦ k Ausgänge aufweist. Wird die Anzahl der Ausgänge pro Pufferspeicher beispielsweise mit m = 2 gewählt, so kann die Durchschaltekapazität von Datenpaketen des beschriebenen Koppelelementes gegenüber einem Koppelelement mit lediglich jeweils einen Ausgang aufweisenden Pufferspeichern zwischen 60 % bis 90 % erhöht werden. Diese Durchschaltekapazität kann jedoch durch eine Erhöhung der Anzahl der Ausgänge pro Pufferspeicher noch erhöht werden.

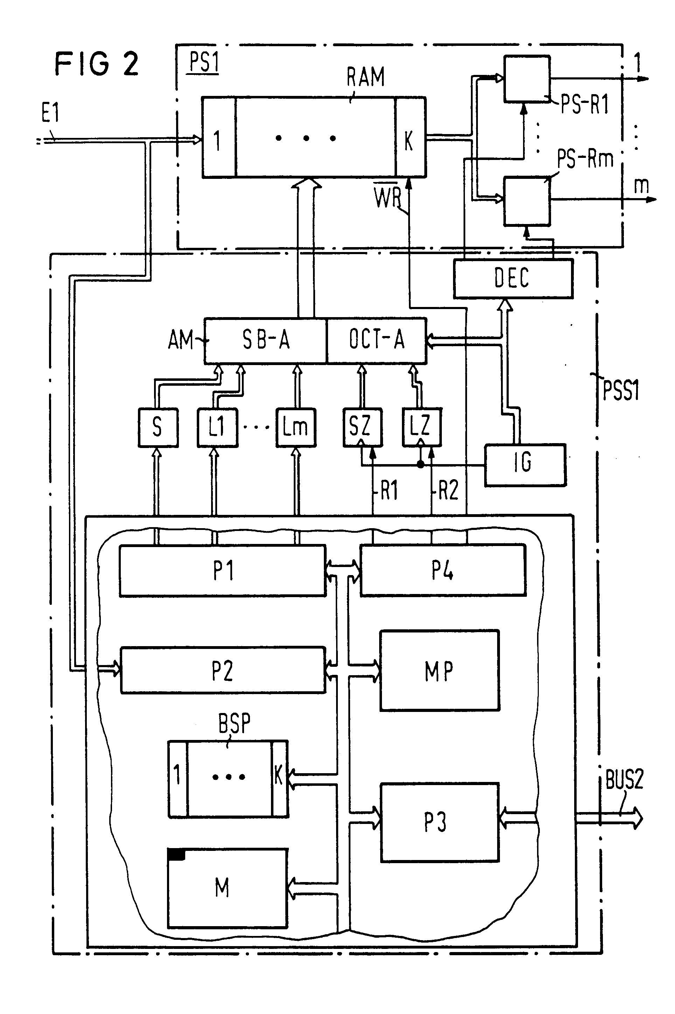

In Figur 2 ist am Beispiel des Pufferspeichers PS1 und der Pufferspeicher-Steuereinrichtung PSS1 ein möglicher Aufbau der in Figur 1 dargestellten Pufferspeicher und der damit verbundenen Pufferspeicher-Steuerungen angegeben. Dabei wird davon ausgegangen, daß, wie bereits oben erwähnt, die einzelnen Datenpakete von einer dem Pufferspeicher vorgeschalteten Einrichtung derart aufbereitet sind, daß diesen jeweils Adressensignale beigefügt sind, durch welche eine der Ausgangsleitungen des Koppelelementes bezeichnet ist. Die mit dem Pufferspeicher PS1 verbundene, in FIG 1 lediglich schematisch dargestellte Eingangsleitung E1 möge dabei als Bündelleitung mit einer Mehrzahl von Einzelleitungen ausgebildet sein, von denen ein Teil für eine oktettweise serielle Übertragung von Datenpaketen und ein weiterer Teil für die Übertragung der genannten Adressensignale benutzt ist.

Der Pufferspeicher PS1 weist einen Schreib/Lese-Speicher RAM auf, der eingangsseitig mit den die Oktetts von Datenpaketen führenden Einzelleitungen der Bündelleitung E1 verbunden ist. Dieser Schreib/Lese-Speicher enthält insgesamt k Speicherbereiche 1 bis k, in welchen jeweils ein Datenpaket oktettweise in aufeinanderfolgenden Speicherzellen speicherbar ist. Ausgangsseitig sind an den Schreib/Lese-Speicher m Parallel-Serien-Register PS-R1 bis PS-Rm angeschlossen. Diese Register, die die in Fig. 1 angegebenen Ausgänge 1 bis m des Pufferspeichers PS1 bilden, sind individuell über jeweils einen Steuereingang für die Aufnahme eines bei einem Lesevorgang am Ausgang des Schreib/Lese-Speichers RAM auftretenden Oktetts ansteuerbar. Wie im folgenden noch erläutert wird, kann im Zuge eines Steuerzyklus in jedes der m Parallel-Serien-Register ein Oktett aufgenommen werden. Diese Oktetts werden anschließend gleichzeitig seriell an den Raumkoppler RK weitergeleitet.

Für die Steuerung des genannten Schreib/Lese-Speichers RAM ist mit dessen Adresseneingängen ein Adressenmultiplexer AM der Pufferspeicher-Steuereinrichtung PSS1 verbunden. Dieser Adressen-Multiplexer ist in zwei Bereiche SB-A und OCT-A unterteilt. An den Bereich SB-A sind ein Register S für die Speicherung einer bei Schreibvorgängen zu benutzenden Speicherbereichsadresse sowie m Register L1 bis Lm für die Speicherung jeweils einer bei Lesevorgängen zu benutzenden Speicherbereichsadresse angeschlossen. Die Register L1 bis Lm sind dabei den mit 1 bis m bezeichneten Ausgängen des Pufferspeichers PS1 zugeordnet. An den Bereich OCT-A sind dagegen ein Oktettzähler SZ für Schreibvorgänge und ein Oktettzähler LZ für Lesevorgänge angeschlossen. Diese Oktettzähler weisen jeweils eine der Anzahl der in einem Datenpaket enthaltenen Oktetts entsprechende Zählperiode auf und werden dafür von einem Impulsgeber IG her angesteuert. Dieser Impulsgeber führt darüber hinaus auch dem Adressenmultiplexer AM und einem Decodierer DEC im Zuge eines Steuerzyklus Einstellsignale (Einstellimpulse) zu. Letzterer weist m Ausgänge auf, die an die oben erwähnten Steuereingänge der Parallel-Serien-Register PS-R1 bis PS-Rm angeschlossen sind.

Der Puffersteuer-Einrichtung PSS1 ist außerdem ein Prozessor PR zugehörig, der beispielsweise aus einer Mikroprozessor-Anordnung gebildet ist. Diese Mikroprozessor-Anordnung weist einen Mikroprozessor MP auf, an dessen Bussystem eine aus den Speichern BSP und M bestehende Speicheranordnung sowie vier Schnittstelleneinrichtungen P1 bis P4 angeschlossen sind. Der Speicher M dient dabei in bekannter Weise als Arbeits- und Programmspeicher, während in dem Speicher BSP zugehörigen Speicherzellen 1 bis k die aktuellen Belegungszustände der Speicherbereiche 1 bis k des Schreib/Lese-Speichers RAM gespeichert sind.

An die Schnittstelleneinrichtung P1 sind die zuvor genannten Register S und L1 bis Lm eingangsseitig angeschlossen, während die Schnittstelleneinrichtung P2 mit der Bündelleitung E1 in Verbindung steht. Über die Schnittstelleneinrichtung P3 ist die Puffersteuer-Steuereinrichtung PSS1 an das in FIG 1 dargestellte Busleitungssystem BUS2 angekoppelt. Schließlich sind an die Schnittstelleneinrichtung P4 eine mit W̅R̅ bezeichnete Leitung sowie Rücksetzleitungen R1 und R2 für die Oktettzähler angeschlossen. Über die Leitung W̅R̅ werden Schreibimpulse zu dem Schreib/Lese-Speicher RAM hin übertragen.

In dem zuvor genannten Speicher BSP ist die aktuelle Belegung der Speicherbereiche des Schreib/Lese-Speichers RAM gespeichert. Anhand dieser Belegung ermittelt der Mikroprozessor MP einen nicht belegten Speicherbereich, in welchem ein im folgenden auf der Bündelleitung E1 auftretendes Datenpaket abzuspeichern ist. Die Anfangsadresse dieses Speicherbereiches wird anschließend in das Register S übertragen.

Bei Auftreten eines Datenpaketes auf der Bündelleitung E1, welches von dem Mikroprozessor anhand des Paketkopfes erkannt wird, überträgt der bereits erwähnte Impulsgeber IG über eine Leitungsanordnung S ein Einstellsignal zu dem Adressenmultiplexer AM hin. Durch dieses Einstellsignal wird der Adressenmultiplexer derart gesteuert, daß er die in dem Register S gespeicherte, zuvor genannte Anfangsadresse sowie einen Anfangszählerstand des Oktettzählers SZ als Adressensignale dem Schreib/Lese-Speicher RAM zuführt. Dieser Anfangszählerstand wird durch ein Rücksetzsignal auf der Rücksetzleitung R1 eingestellt. Außerdem überträgt der Mikroprozessor MP über die Leitung W̅R̅ Schreibimpulse an den Schreib/Lese-Speicher. Aufgrund des Auftretens dieser Schreibimpulse und einer damit verbundenen Inkrementierung des aktuellen Zählerstandes des Oktettzählers SZ werden die einzelnen Oktetts des gerade auftretenden Datenpaketes fortlaufend in Speicherzellen des Schreib/Lese-Speichers abgespeichert. Nach der vollständigen Speicherung des Datenpaketes wird der in dem Prozessor PR vorhandene Speicher BSP aktualisiert und als Vorbereitung für den erneuten Empfang eines Datenpaketes eine Anfangsadresse eines freien Speicherbereiches des Schreib/Lese-Speichers RAM in das Register S übertragen. Außerdem werden, wie bereits oben erwähnt, mit der Speicherung des betreffenden Datenpaketes die diesem auf der Bündelleitung E1 beigefügten Adressensignale zusammen mit der Anfangsadresse des gerade benutzten Speicherbereiches des Schreib/Lese-Speichers RAM über das Busleitungssystem BUS2 zu der zentralen Steuereinrichtung ZST hin übertragen.

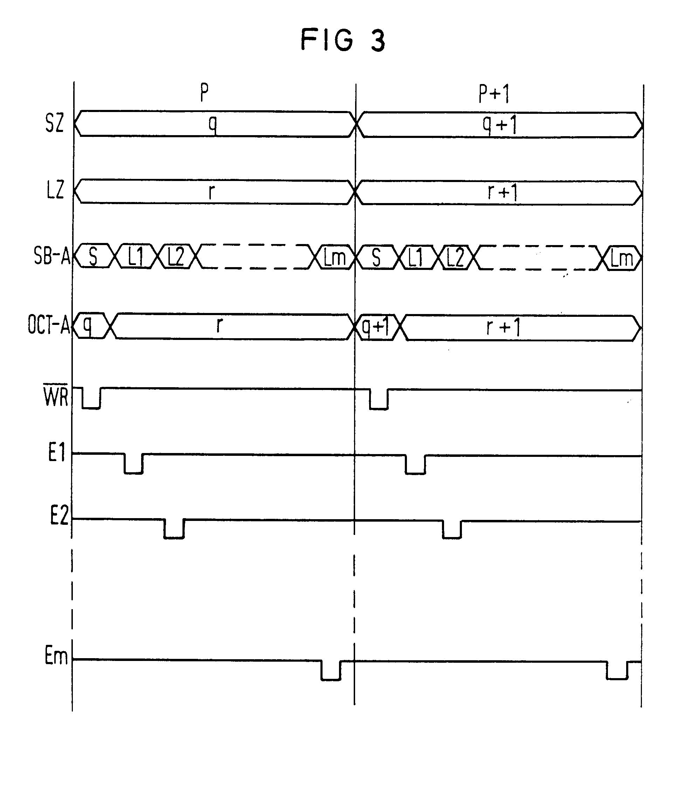

Darüber hinaus überträgt die zentrale Steuereinrichtung ZST über das Busleitungssystem BUS2, wie bereits oben erwähnt, in festgelegten Zeitintervallen nacheinander n Steuerinformationen zu ausgewählten Pufferspeicher-Steuereinrichtungen hin, um die jeweils zugehörigen Pufferspeicher in eine Übertragung von Datenpaketen über den Raumkoppler RK einzubeziehen. In diesen Steuerinformationen sind jeweils die Anfangsadresse desjenigen Speicherbereiches des Schreib/Lese-Speichers RAM, in welchem der zu übertragende Datenblock gespeichert ist, sowie Angaben bezüglich des für die Übertragung zu benutzenden Ausganges des jeweiligen Pufferspeichers enthalten. Dabei kann beispielsweise die in FIG 3 dargestellte Pufferspeicher-Steuereinrichtung PSS1 entsprechend der Anzahl der bei dem zugehörigen Pufferspeicher PS1 vorhandenen Ausgänge bis zu m Steuerinformationen zugeführt erhalten. Auf die Aufnahme dieser Steuerinformationen hin werden anhand der Ausgangsangaben die genannten Anfangsadressen in die Register L1 bis Lm übertragen.

Anschließend wird von der Pufferspeicher-Steuereinrichtung PSS1 ein Steuerzyklus durchgeführt, der sich über die Dauer des gerade begonnenen Zeitintervalls erstreckt und in eine der Anzahl der maximal in einem Datenpaket enthaltenen Oktetts entsprechende Anzahl von Unterzyklen unterteilt ist. In jedem dieser Unterzyklen werden nacheinander Einstellsignale über die Leitungsanordnung S zu dem Adressenmultiplexer AM und dem Decodierer DEC hin übertragen. Durch diese Einstellsignale werden dem Schreib/Lese-Speicher RAM zum Auslesen von Oktetts im Zeitmultiplexbetrieb die in den Registern L1 bis Lm gespeicherten Anfangsadressen sowie der aktuelle Zählerstand des Oktettzählers LS als Adressensignale bereitgestellt. Der Oktettzähler nimmt dabei bei Beginn des Steuerzyklus durch ein Rücksetzsignal auf der Rücksetzleitung R2 seinen Anfangszählerstand ein. Am Ende eines jeden Unterzyklus wird dann, ausgehend von dem Anfangszählerstand, der aktuelle Zählerstand inkrementiert.

In jedem der gerade erläuterten Unterzyklen werden damit m Oktetts von m verschiedenen Datenblöcken ausgelesen und den Parallel-Serien-Registern PS-R1 bis PS-Rm zugeführt. Diese Register werden dabei über den Decodierer DEC nacheinander für die Aufnahme eines Oktetts aktiviert. Nach der Aufnahme dieser Oktetts erfolgt dann eine gleichzeitige serielle Übertragung zu dem Raumkoppler RK hin.

Der zuvor erläuterte Steuerzyklus ist im übrigen so festgelegt, daß in jedem Unterzyklus zusätzlich ein Oktett eines auf der Bündelleitung E1 auftretenden Datenpaketes in den Schreib-Lese-Speicher RAM eingeschrieben werden kann. Dies geht auch aus dem in FIG 3 dargestellten Zeitdiagramm hervor. In diesem sind für zwei aufeinanderfolgende Unterzyklen p und p+1 der jeweils aktuelle Zählerstand q bzw. q+1 des Oktettzählers SZ, der jeweils aktuelle Zählerstand r bzw. r+1 des Oktettzählers LZ, die an den Ausgängen der Bereiche SB-A und OCT-A des Adressenmultiplexers AM auftretenden Adressensignale, die zeitliche Lage eines Schreibimpulses W̅R̅ sowie auf der Leitungsanordnung S auftretende Einstellsignale E1 bis Em angegeben.

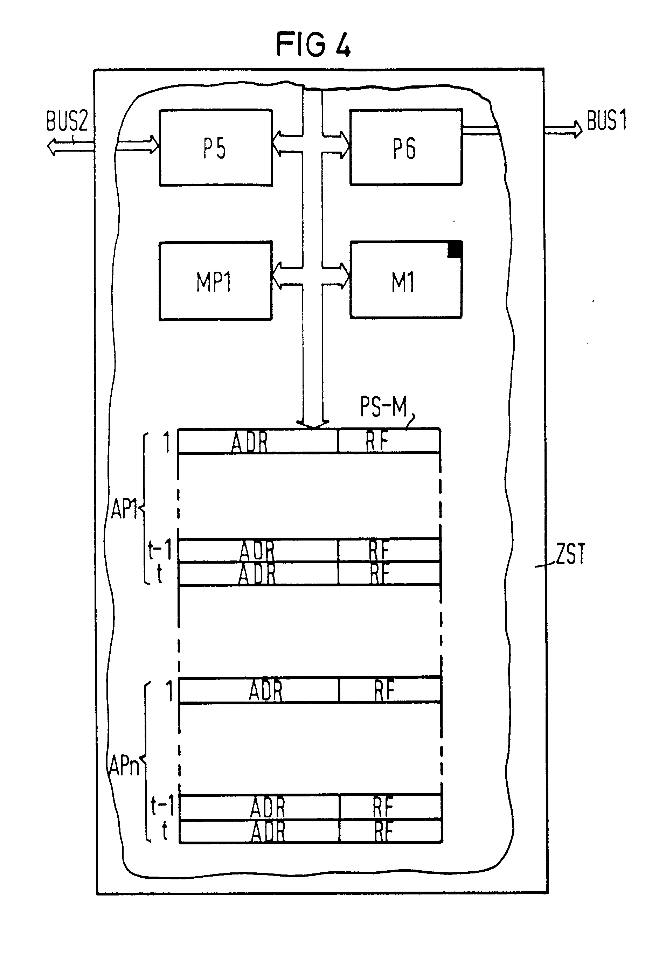

In FIG. 4 ist ein möglicher Aufbau der in FIG. 1 dargestellten zentralen Steuereinrichtung ZST ausschnittweise dargestellt. Danach weist die zentrale Steuereinrichtung einen Mikroprozessor MP1 auf, an dessen Bussystem zwei Schnittstelleneinrichtungen P5 und P 6 sowie eine aus einem Speicher M1 und einem Schreib/Lese-Speicher PS-M bestehende Speicheranordnung angeschlossen sind. Die Schnittstelleneinrichtung P5 ist dabei für einen Datenaustausch mit den Pufferspeicher-Steuereinrichtungen PSS1 bis PSSn über das Busleitungssystem BUS2 vorgesehen. Über die Schnittstelleneinrichtung P6 steht dagegen die zentrale Steuereinrichtung ZST mit dem Busleitungssystem BUS1 in Verbindung.

Der Speicher M1 dient in bekannter Weise als Arbeits- und Programmspeicher, während in dem Speicher PS-M die oben erwähnten, den in FIG 1 angegebenen Ausgangsleitungen 1 bis n zugeordneten Warteschlangen-Pufferspeicher AP1 bis Apn eingerichtet sind. Der Speicher PS-M weist dafür diesen Warteschlangen-Pufferspeichern entsprechende Speicherbereiche AP1 bis APn auf, die durch die der zentralen Steuereinrichtung ZST zugeführten, zusammen mit Datenpaketen auf den Eingangsleitungen E1 bis En auftretenden Adressensignale ansteuerbar sind. Jeder dieser Speicherbereiche ist dabei in eine Anzahl t von Speicherzellen unterteilt, wobei t beispielsweise bei einer Speicherkapazität der Pufferspeicher PD1 bis PSn von jeweils 20 Datenpaketen mit 64 festgelegt sein kann. Diese Speicherzellen dienen für die Speicherung der von den Pufferspeicher-Steuereinrichtungen zusammen mit den gerade genannten Adressensignalen übertragenen Speicherbereichs-Adressen, unter welchen die über die jeweilige Ausgangsleitung zu übertragenden Datenpakete in den Pufferspeichern PS1 bis PSn gespeichert sind. Für diese Speicherung, die beispielsweise nach Maßgabe einer in dem Speicher M1 vorhandenen Liste für freie Speicherzellen vorgenommen werden kann, ist in jeder der Speicherzellen ein mit ADR bezeichneter Zellenteil vorgesehen. In einem weiteren Zellenteil RF ist die Reihenfolge des Eintreffens der einzelnen Speicherbereichs-Adressen und damit die Reihenfolge der zu übertragenden Datenpakete markiert. Diese Reihenfolge wird mit jedem Einschreiben und Auslesen von Speicherbereichs-Adressen aktualisiert, beispielsweise nach einem bekannten Kettungsprinzip.

Anhand der in dem gerade beschriebenen Speicher PS-M hinterlegten Speicherbereichs-Adressen wählt der der zentralen Steuereinrichtung ZST zugehörige Mikroprozessor in aufeinanderfolgenden Zeitintervallen jeweils n Datenpakete für eine Weiterleitung an die n Ausgänge des Raumkopplers RK aus. Dabei können in Abhängigkeit von der Auslastung der einzelnen Ausgänge des Raumkopplers bis zu m, in demselben Pufferspeicher gespeicherte Datenpakete berücksichtigt sein. Nach einer solchen Auswahl erfolgt dann in der oben angegebenen Weise eine Einstellung des Raumkopplers RK und eine Übertragung von Steuerinformationen zu den in Frage kommenden Pufferspeicher-Steuereinrichtungen hin.

Abschließend sei darauf hingewiesen, daß anhand der Figur 4 lediglich ein Ausführungsbeispiel für die Warteschlangen-Pufferspeicher beschrieben worden ist. Diese können jedoch auch in einer davon abweichenden Form realisiert sein.

## Patentansprüche

1. Vermittlungsknoten für die Vermittlung von in Datenpaketen übertragenen Datensignalen mit wenigstens einem Koppelelement, welches eine Anzahl n von Eingangsleitungen (E1,...,En) sowie eine Anzahl n von mit den Eingangsleitungen über einen Raumkoppler (RK) wahlfrei verbindbaren Ausgangsleitungen (A1,...,An) aufweist und den Eingangsleitungen jeweils ein Pufferspeicher (PS1,...,PSn) zugeordnet ist, in welchem k auf der jeweiligen Eingangsleitung auftretende Datenpakete vor ihrer Weiterleitung an die jeweils durch in dem jeweiligen Datenpaket enthaltene Adressensignale bezeichnete Ausgangsleitung speicherbar sind und welcher eine Mehrzahl m≦k Ausgänge (1,...,m) aufweist, über die gleichzeitig m in dem jeweiligen Pufferspeicher gespeicherte und an m unterschiedliche Ausgangsleitungen weiterzuleitende Datenpakete einem mxn Eingänge und n Ausgänge aufweisenden Raumkoppler (RK) zuführbar sind,
wobei den Pufferspeichern (PS1,...,PSn) jeweils eine Steuereinrichtung (PSS1,...,PSSn) zugehörig ist, welche die Aufnahme von Datenpaketen in freie Speicherbereiche des zugehörigen Pufferspeichers und die Abgabe von Datenpaketen an den Raumkoppler (RK) nach Maßgabe der für eine Vermittlung gerade bereitstehenden Ausgangsleitungen des Koppelelementes steuert und welche bei der Aufnahme eines Datenpaketes in einen Speicherbereich des zugehörigen Pufferspeichers Angaben bezüglich dieses Speicherbereiches und dem jeweiligen Datenpaket beigefügte, eine der Ausgangsleitungen des Koppelelementes bezeichnende Adressensignale einer zentralen Steuereinrichtung (ZST) zuführt
und wobei die zentrale Steuereinrichtung nach Maßgabe der ihr von den einzelnen Steuereinrichtungen zugeführten Informationen in vorgegebenen Zeitintervallen einerseits n Datenpakete für eine Vermittlung auswählt sowie den Raumkoppler (RK) entsprechend einstellt und andererseits den Steuereinrichtungen jeweils Angaben bezüglich derjenigen Speicherbereiche des zugehörigen Pufferspeichers, in welchen die gerade zu übertragenden Datenpakete gespeichert sind, sowie Angaben bezüglich der für die Übertragung der Datenpakete zu benutzenden Ausgänge des zugehörigen Pufferspeichers zuführt,
**dadurch gekennzeichnet,**
daß den Ausgangsleitungen (A1,...,An) jeweils ein Warteschlangen-Pufferspeicher (AP1,...,APn) zugeordnet ist, in welchen nach Maßgabe der von den Steuereinrichtungen bereitgestellten Adressensignale die mit diesen zusammen auftretenden Speicheradressen einschreibbar sind,
daß die Warteschlangen-Pufferspeicher (AP1,...,APn) von der zentralen Steuereinrichtung (ZST) in den vorgegebenen aufeinanderfolgenden Zeitintervallen für die Abgabe jeweils einer Speicheradresse zyklisch ansteuerbar sind
und daß die zentrale Steuereinrichtung (ZST) anhand der von den Warteschlangen-Rufferspeichern bereitgestellten Speicheradressen einerseits die genannte Einstellung des Raumkopplers (RK) steuert und andererseits die betreffenden Speicheradressen zusammen mit den genannten Angaben den den in Frage kommenden Pufferspeichern zugehörigen Steuereinrichtungen zuführt.

2. Vermittlungsknoten nach Anspruch 1, **dadurch gekennzeichnet,** daß sich in aufeinanderfolgenden Zeitintervallen die Startposition für die zyklische Ansteuerung der Warteschlangen-Pufferspeicher (AP1,...,APn) durch die zentrale Steuereinrichtung (ZST) jeweils um einen Warteschlangen-Pufferspeicher verschiebt.

3. Vermittlungsknoten nach Anspruch 1 oder 2, **dadurch gekennzeichnet,** daß die zentrale Steuereinrichtung (ZST) für den Fall, daß bei der zyklischen Abfrage der Warteschlangen-Pufferspeicher (AP1...,APn) von zumindest einem der Warteschlangen-Pufferspeicher eine Speicheradresse bereitgestellt wird, welche einen Pufferspeicher (z. B. PS1) bezeichnet, dessen m Ausgänge bereits für die Abgabe eines Datenpaketes belegt sind, den jeweiligen Warteschlangen-Pufferspeicher (PS1) erneut zur Abgabe der nächsten anstehenden Speicheradresse ansteuert.

## Claims

1. Switching node for switching data signals transmitted in data packets, having at least one coupling element which has a number n of input lines (E1,...,En) and a number n of output lines (A1,...,An) which can be selectably connected to the input lines via a space switch (RK), and assigned to each of the input lines is a buffer store (PS1,...,PSn) in which k data packets occurring on the respective input line can be stored before being forwarded to the respective output line identified by address signals contained in the respective data packet, and which has a plurality m≦k of outputs (1,...,m) via which m data packets stored in the respective buffer store and to be forwarded to m different output lines can be simultaneously supplied to a space switch (RK) having mxn inputs and n outputs, in which there is associated with each of the buffer stores (PS1,...,PSn) a control device (PSS1,...,PSSn) which controls the reception of data packets into free storage areas of the associated buffer store and the output of data packets to the space switch (RK) in accordance with the output lines of the coupling element currently available for switching and which, when a data packet is received into a storage area of the associated buffer store, supplies information relating to said storage area and address signals to a central control device (ZST) which are appended to the respective data packet and identify one of the output lines of the coupling element, and in which at predetermined time intervals the central control device, in accordance with the information supplied to it from the individual control devices, on the one hand selects n data packets for switching and also sets the space switch (RK) accordingly, and on the other hand supplies the control devices in each case with information relating to those storage areas of the associated buffer store in which the data packets pending for transmission are stored, and also information relating to the outputs of the associated buffer store to be used for transmitting the data packets, characterised in that there is assigned to each of the output lines (A1,...,An) a queue buffer store (AP1,...,APn) into which, in accordance with the address signals supplied by the control devices, the storage addresses occurring together therewith can be written, in that the queue buffer stores (AP1,...,APn) can be accessed cyclically by the central control device (ZST) at the predetermined successive time intervals for the output of one storage address in each case, and in that the central control device (ZST) on the one hand controls the aforesaid setting of the space switch (RK) on the basis of the storage addresses supplied by the queue buffer stores, and on the other hand supplies the respective storage addresses together with the aforesaid information to the control devices associated with the respective buffer stores.

2. Switching node according to Claim 1, characterised in that the starting position for the cyclical accessing of the queue buffer stores (AP1,...,APn) by the central control device (ZST) is shifted at successive time intervals by one queue buffer store in each case.

3. Switching node according to Claim 1 or 2, characterised in that the central control device (ZST) accesses the respective queue buffer store (PS1) again for outputting the next pending storage address if, during the cyclical interrogation of the queue buffer stores (AP1,...,APn), a storage address is supplied by at least one of the queue buffer stores which identifies a buffer store (e.g. PS1) whose m outputs are already occupied for the output of a data packet.

## Revendications

1. Noeud de commutation pour la commutation de signaux de données transmis dans des paquets de données, comportant au moins un élément de couplage, qui possède un nombre n de lignes d'entrée (E1,...,En) ainsi qu'un nombre n de lignes de sortie (A1,...,An) pouvant être raccordées au choix aux lignes d'entrée par l'intermédiaire d'un coupleur spatial (RK), tandis qu'aux lignes d'entrée est associée respectivement une mémoire tampon (PS1,...,PSn), dans laquelle k paquets de données apparaissant dans la ligne d'entrée respective peuvent être mémorisés avant leur retransmission à la ligne de sortie désignée respectivement par des signaux d'adresses contenus dans le paquet de données respectif, la mémoire tampon possédant une multiplicité m ≦ k sorties (1,...,m), au moyen desquelles simultanément m paquets de données, qui sont mémorisés dans la mémoire tampon respective et qui doivent être retransmis à m lignes de sortie différentes, peuvent être envoyées à un coupleur spatial (RK) possédant m x n entrées et n sorties, et
dans lequel aux mémoires tampons (PS1,...,PSn) est associé respectivement un dispositif de commande (PSS1,...,PSSn), qui commande la réception de paquets de données dans des zones libres de la mémoire tampon associée et la délivrance de paquets de données au coupleur spatial (RK) en fonction des lignes de sortie de l'élément de couplage, précisément préparés pour une commutation, et qui, lors de la réception d'un paquet de données dans une zone de la mémoire tampon associée, envoie des indications concernant cette zone de mémoire et des signaux d'adresses qui sont adjoints au paquet de données respectifs et désignent l'une des lignes de sortie de l'élément de couplage, à un dispositif central de commande (ZST), et
dans lequel à des intervalles de temps prédéterminés, et en fonction des informations qui lui sont envoyées par les dispositifs individuels de commande, le dispositif central de commande sélectionne, d'une part, les paquets de données pour une commutation et règle de façon correspondante le coupleur spatial (RK), et, d'autre part, envoie aux dispositifs de commande respectivement des indications concernant les zones de la mémoire tampon associée, dans lesquelles sont mémorisés les paquets de données devant être précisément transmis, ainsi que des indications concernant les sorties de la mémoire tampon associée, qui doivent être utilisées pour la transmission des paquets de données,
caractérisé par le fait
qu'aux lignes de sortie (A1,...,An) est associée respectivement une mémoire tampon à file d'attente (AP1,...,APn), dans laquelle en fonction des signaux d'adresses préparés par les dispositifs de commande, peuvent être enregistrées les adresses de mémoire qui apparaissent conjointement avec ces signaux,
que les mémoires tampons à file d'attente (AP1,...,APn) peuvent être commandées cycliquement par le dispositif central de commande (ZST) pendant les intervalles de temps successifs prédéterminés pour la délivrance respectivement d'une adresse de mémoire, et
que sur la base des adresses de mémoire préparées par les mémoires tampons en file d'attente, le dispositif central de commande (ZST) commande ledit réglage du coupleur spatial (RK) et envoie, d'autre part, les adresses de mémoire concernées ainsi que lesdites indications aux dispositifs de commande associés aux mémoires tampons, qui entrent en jeu.

2. Noeud de commutation suivant la revendication 1, caractérisé par le fait que pendant des intervalles de temps successifs, la position de départ pour la commande cyclique des mémoires tampons à file d'attente (AP1,...,APn) est déplacée respectivement d'une mémoire tampon à file d'attente, par le dispositif central de commande (ZST).

3. Noeud de commutation suivant la revendication 1 ou 2, caractérisé par le fait que dans le cas où, lors de l'interrogation cyclique des mémoires tampons à file d'attente (AP1,...,APn), une adresse de mémoire est préparée, qui désigne une mémoire tampon (par exemple PS1) dont m sorties sont déjà occupées par la délivrance d'un paquet de données, le dispositif central de commande (ZST) commande la mémoire tampon respective à file d'attente (PS1) à nouveau pour qu'elle délivre l'adresse de mémoire immédiatement suivante présente.
